# EUROPEAN PATENT APPLICATION

(11) **EP 1 113 545 A1**
(43) Date of publication of application: **04.07.2001**
(21) Application number: 99204598.9
(22) Date of filing: 29.12.1999
(51) Int. Cl.: H02B 1/21

(54) **A medium voltage power distribution cubicle**

(71) Applicant: ABB T&D Technologies Ltd., 8059 Zürich (CH)
(72) Inventor: Capitanio, Roberto, 24123 Bergamo (IT); Colombo, Franco, 21046 Malnate, Varese (IT); Boattini, Fulvio, 20090 Trezzano S/N, Milano (IT); Gemme, Carlo, 16166 Genova Quinto, Genova (IT)
(74) Representative: Giavarini, Francesco

(57) **Abstract**

A medium voltage power distribution cubicle, comprising one or more conductive bus-bars for providing electric power, each comprising a plurality of feeding elements, for connecting a predefined number of power supply derivations.

## Description

The present invention relates to a medium voltage power distribution cubicle. More particularly, the present invention relates to a medium voltage power distribution cubicle, which is suitable for the use in primary and/or secondary medium voltage switchboards and/or power distribution systems.

It should be understood hereinafter that with the term "medium voltage" (MV) a voltage range approximately from 1 KV to 100 KV is to be considered.

MV power distribution cubicles are well known in the state of the art. Traditionally MV power distribution cubicles are used for building up MV switchboards. In fact the main function of a power distribution cubicle is to provide, internally to a medium voltage switchboard, a power supply derivation from a bus-bar system, so as to provide electric power to a load.

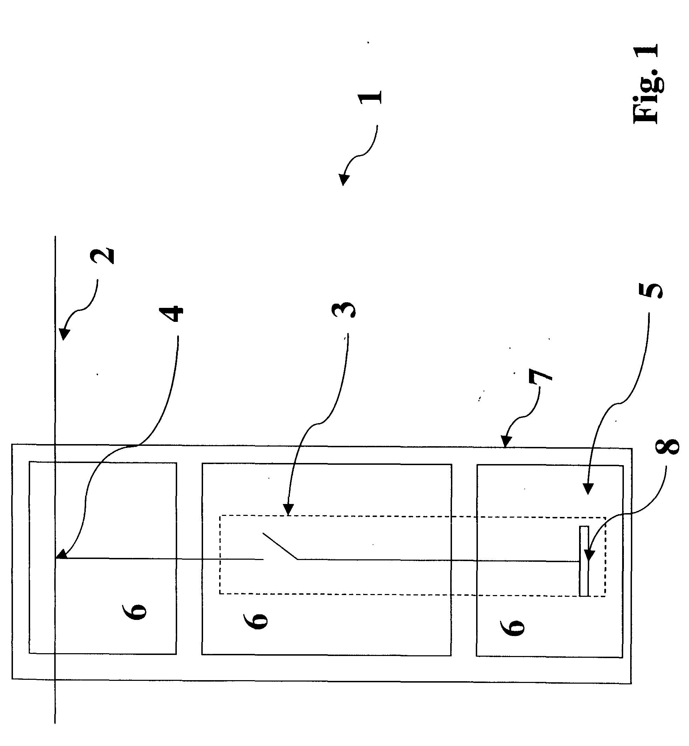

Referring to the figure 1, an unifilar diagram of a known MV power distribution cubicle is represented. A MV power distribution cubicle 1 comprises generally a portion of bus-bar system 2 having one (mono-phase bus-bar system) or more (three-phase bus-bar system) conductive bus-bars. Each of said conductive bus-bars comprises a single connection 4 to a power supply derivation 5. The power supply derivation 5 can comprise, for example, a power apparatus 3, which can implement a specific electric functionality which is needed. For example, the power apparatus 3 can comprise a disconnector and/or a circuit breaker and/or one or more devices for sensing current and voltage. The power apparatus 3, the connection 4 and the secondary connection 8 (for example to a load) are generally enclosed inside a plurality metallic panels 6 that are enclosed in an external metallic structure 7. Each of the panels 6 can be inserted and/or extracted from MV power distribution cubicle, generally through the use of auxiliary equipment. In most of the cases, different MV power distribution cubicles, each implementing a specific electric functionality, are serially connected so as to build up a MV switchboard.

Common MV power distribution cubicles are characterised by some drawbacks.

The main drawback is due to the fact that common MV power distribution cubicles are generally arranged for having a single connection to the bus-bar system. This fact mainly implies that for building a MV switchboard it is necessary to arrange an high number of MV cubicles.

This activity is particularly difficult because it requires many junctions between the bus-bars systems used in each MV cubicle. Moreover, many different power supply apparatuses 3 have to be arranged in order to have all the functionalities that are commonly required. This activity is particularly difficult due to the fact that, very often, custom electrical configurations for MV switchboard have to be realised. Obviously this fact entails high engineering, manufacturing and installation costs, the need of having a large available area for assembling the MV switchboard and long through-put times.

Moreover the fact of having a single connection with the bus-bar system implies a non-optimal utilisation of the conductive bus-bars. In fact, very often they must be very long in order to provide the suitable number of power supply derivations. This fact entails obviously high installation cost for the MV switchboard, which is realised arranging said MV cubicles.

Furthermore, the presence of various metallic structures (the panels 6 and the external structure 7), whose main aim is to provide structural, galvanic insulation and arc-proof segregation from the conductive bus-bars, makes the access to the cubicle often difficult. Consequently installation and maintenance operation are often difficult and required the use of auxiliary equipment, with a further increase of costs.

Main aim of the present invention is to provide a medium voltage power distribution cubicle, which is particularly compact with respect of the traditional medium voltage cubicles allowing, in the same time, implementing a plurality of electric functionalities.

Within this aim, another object of the present invention is to provide a medium voltage power distribution cubicle, which allows connecting a plurality of power supply derivations to the bus-bars that supply electric power.

Another object of the present invention is to provide a medium voltage power distribution cubicle, which allows reducing remarkably the size of a MV switchboard, which can be obtained therefore, and, in the same time, the number of cubicles needed for obtaining the required electric functionalities.

Another object of the present invention is to provide a medium voltage power distribution cubicle, which allows installing a MV switchboard with a remarkable save of room and reduction of manufacturing and installation time and costs.

Another object of the present invention is to provide a medium voltage power distribution cubicle, which is easy to install ad which allows an easy execution of maintenance operation, without the use of auxiliary equipment.

Not the least object of the present invention is to provide a a medium voltage power distribution cubicle, which is easy to realise and at low costs.

Thus the present invention provides a medium voltage (MV) power distribution cubicle, which comprises:
- a supporting frame comprising a plurality of supporting elements;
- one or more conductive bus-bars for providing electric power to one or more loads, said bus-bars being supported by said supporting frame.

The present invention is characterised by the fact that each of said bus-bars comprises a plurality of feeding elements, for connecting a predefined number of power supply derivations.

The present invention allows achieving the intended aims. In fact the presence of a plurality of feeding elements for each of said bus-bars allows MV power distribution cubicle to host a plurality of different electrical functions, in a room which is remarkably less than that one traditionally required.

The medium voltage power distribution cubicle according to the present invention, is therefore remarkably more compact if compared with the traditional solutions of the state of the art.

Consequently, a reduced number of MV power distribution cubicles can be used for installing a MV switchboard, with consequent saving of room and installation costs.

Further characteristics and advantages of the invention shall emerge more clearly from the description of preferred but not exclusive embodiments of the MV power distribution cubicle according to the present invention, that are illustrated purely by way of example and without limitation in the attached drawings, wherein:
figure 1 is a diagram, which illustrates a schematic view of a MV power distribution cubicle known;
figure 2 is a diagram, which illustrates a schematic view of an embodiment of the MV power distribution cubicle according to the present invention;
figure 3 is a diagram, which illustrates a schematic view of a further embodiment of the MV power distribution cubicle according to the present invention;
figure 4 is a diagram, which illustrates two unifilar diagrams (indicated with the references "4A" and "4B") related to two preferred embodiments of the MV power distribution cubicle according to the present invention;
figure 5 is a diagram, which illustrates a further embodiment of the MV power distribution cubicle according to the present invention.

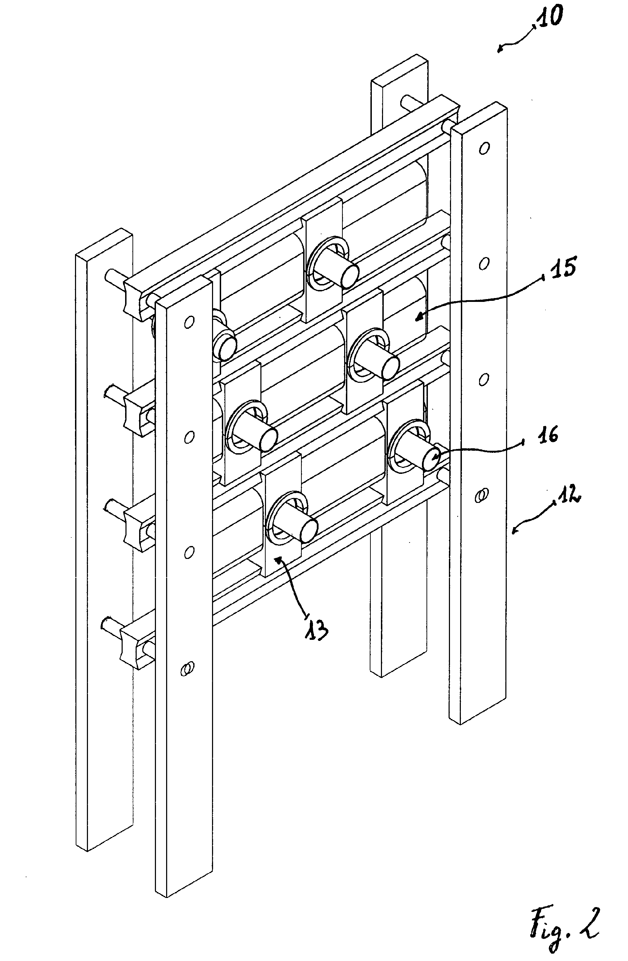

Referring to figure 2, it is represented an embodiment of the medium voltage power distribution cubicle (hereinafter for the sake of simplicity called "MV cubicle") according to the present invention.

The MV cubicle, indicated by reference 10, comprises a supporting frame 11 which comprises a plurality of supporting elements and one or more of conductive bus-bars 15 for providing electric power to one or more loads (not illustrated). The bus-bars 15 are preferably made of a single-piece of conductive material and are supported by the supporting frame 11.

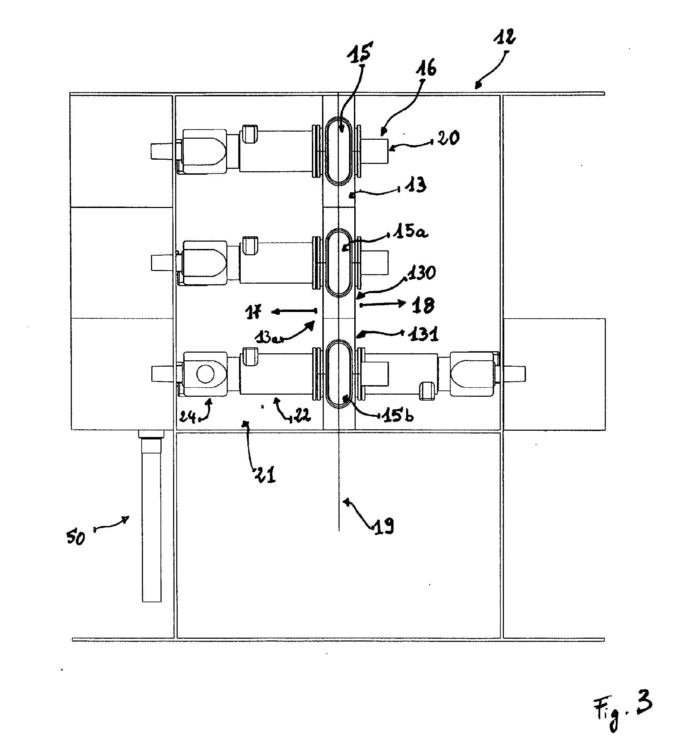

Said plurality of supporting elements comprises preferably first supporting elements 12 for fixing the supporting frame 11 to a supporting base (not illustrated). In the embodiment shown in figure 2, the first supporting elements 12 are preferably positioned approximately in a vertical position with respect of said supporting base. In the embodiment shown in figure 3, the first supporting elements comprise a plurality of panels arranged so as to include the bus-bars 15.

Also second supporting elements 13, mechanically connected between two adjacent bus-bars 15, can be provided. Advantageously, third auxiliary supporting elements 14, for mechanically connecting the second supporting elements 13 to the first supporting elements 12, can be provided.

It should be noticed that the embodiment of the MV cubicle 10, which is shown in figure 2, comprises three bus-bars 15. This embodiment is particularly suitable for three-phase bus-bar systems. Accordingly, if the present invention is implemented in applications having a different number of phases, a different number of bus-bars 15 can be provided. For example, for a mono-phase MV application, a single bus-bar 15 can be provided.

Moreover, the bus-bars 15 can lay along a direction which is substantially parallel with respect of the plane comprising the supporting base of the MV cubicle 10 (in practice in an approximately horizontal configuration). Alternatively, they can lay along a direction which is substantially vertical with respect of the plane comprising the supporting base of the MV cubicle 10 (so that in an approximately vertical configuration).

Each of the bus-bars 15 of the MV power supply, according to the present invention, comprises a plurality of feeding elements 16, for connecting a predefined number of power supply derivations (not illustrated in figure 2).

As mentioned above the possibility of connecting more power supply derivations to each of the bus-bars 15 allows a remarkable reduction of the size of the MV cubicle 10, with respect of traditional solutions. As described, more electrical functionalities can be integrated in the same MV power supply cubicle.

The feeding elements 16 are advantageously positioned along directions that are approximately vertical with respect of the laying plane of the bus-bars 15. In particular they can be vertically or horizontally aligned or shifted depending on the configuration chosen for the bus-bars 15 and according to the needs.

In a preferred embodiment of the present invention, the feeding elements 16 are positioned along opposite directions that are approximately vertical with respect of the laying plane of the bus-bars 15.

This embodiment is clearly illustrated in figure 3 where a further embodiment of the present invention is presented. It can be noticed that a plurality of feeding elements 16 are connected to each bus bar 15, on substantially vertical directions (arrows 17 and/or 18), that can be opposite or parallel, with respect of laying plane of the bus-bars 15 (dotted line 19).

If opposite directions are chosen preferably each of the bus-bars 15 can comprise totally 4 or 6 feeding elements 16. Otherwise, if parallel directions are chosen, each of the bus-bars 15 can comprise totally 2 or 3 feeding elements 16.

These solutions are particularly advantageous because they allow obtaining a further reduction of the size of the MV power supply cubicle according to the present invention. In practice, a plurality of power supply derivations can be connected to each of the bus-bars 15 both at the front and the rear of the MV cubicle 10. It should also be noticed that, using the described configuration for the MV cubicle according to the present invention, it is possible to build up, with a minimal number of cubicles, the main configurations for MV switchboards that are generally installed.

As illustrated in figure 3, a feeding element 16 comprises preferably a conductive body 20, which protrudes from a surface 21 of a bus-bar 15.

The conductive body 20 has preferably a cross-section, which is approximately cylindrical while the bus-bars 15 has preferably an oval cross-section. These solutions are particularly advantageous because they allow to maintain a distribution of the electric current, which is approximately uniform, avoiding the formation of hot-spots. Moreover, the described shapes of the conductive body 20 and of the bus-bars 15 allow to assembly very quickly, the feeding elements to the bus-bars avoiding casting or moulding processes, that are necessarily more complicated. In this way, the installation of the MV cubicle 10 is quite facilitated.

Referring to figure 3, the second supporting elements 13, possibly having also an insulation function, are approximately positioned in the same laying plane 19 of the bus-bars 15. In particular, as described above, each second supporting element 13 is mechanically connected between to adjacent bus-bars 15. For example, referring to figure 3 the second supporting element 13a is mechanically connected between the bus-bars 15a and 15b that are adjacent.

In a preferred embodiment the supporting element 13a comprises an hollow body, having a first saddle-shaped element 130, mechanically connected to the bus-bar 15a, and a second saddle-shaped element 131, mechanically connected to the bus-bar 15b.

The elements 130 e 131 are assembled so as to form said hollow body comprised in the second supporting element 13a.

Preferably the first and second elements 130 and 131 are made of insulating material.

In practice, during an installing phase of the MV cubicle 10, the elements 130 and 131 are positioned as indicated and then are assembled so as to form a supporting body for two adjacent bus-bars. Through the third auxialiary supporting elements (not illustrated in figure 3, see for clarity reference 14 of figure 2), each of the second supporting elements 13 can be mechanically connected to the first supporting elements 12, so as to form the supporting frame 11.

This solution is quite advantageous because, provided that it allows obtaining a strong mechanical structure for the supporting frame 11, it further facilitates the installation of the MV cubicle 10. In practice the installation of the MV cubicle 10 can be fully performed on the field arranging a predefined number of standard pieces.

The supply derivations (partially represented infigure 3) comprises preferably one or more power apparatuses 21 that connected to a secondary connection 50 which can provides power for example to a load (not shown). The secondary powe apparatus 21 can comprise for example disconnectors 22 and/or circuit breakers 24 and/or plug-in elements (not shown) and/or switchgears (not shown) and/or current and/or voltage sensing devices (not shown).

In practice, as remarked above, many different electrical functionalities can be integrated in the same MV cubicle 10.

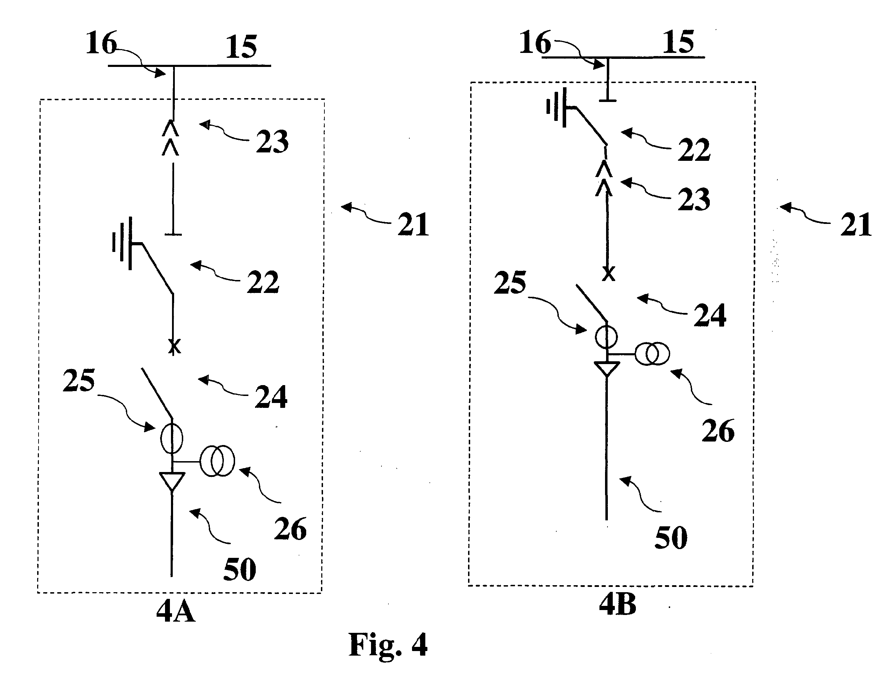

Referring to figure 4 (reference 4A), in a preferred embodiment, a power apparatus 21 comprises preferably a disconnector 22 and a movable plug-in element 23 for operatively connecting the disconnector to one said feeding elements 16, assembled with a bus-bar 15. A circuit breaker 24 is operatively connected to the disconnector 22 and is positioned downstream the disconnector 22. Then a current sensing device 25 and a voltage sensing device 26 are positioned so as to measure the current and the voltage downstream to the circuit breaker 24.

Alternatively, (reference 4B) the power apparatus 21 can comprise a two or three position disconnector 22, which is fixed to one of said feeding elements 16. A movable plug-in element 23 is provided for operatively connecting the disconnector 22 to a circuit breaker 24, positioned downstream the disconnector 22.

Then they can be provided a current sensing device 25 and a voltage sensing device 26, positioned so as to measure the current and the voltage downstream to the circuit breaker 24.

The power apparatuses 21 can be easily positioned along preferred directions according to the needs. So, for example, the circuit breaker 24 can be positioned approximately parallel or perpendicular with respect of the direction of the bus-bars 15.

The described configurations for the power apparatus 21 are quite advantageous because they facilitate the maintenance operations for the devices that are connected, through the feeding elements 16, to the bus-bars 15. In fact, as described, every power supply apparatus 21 is made of a composition of elements that can be subsequently plugged. This fact allows obtaining an high level of stardardisation and allows using the same devices for implementing different electric functionalities.

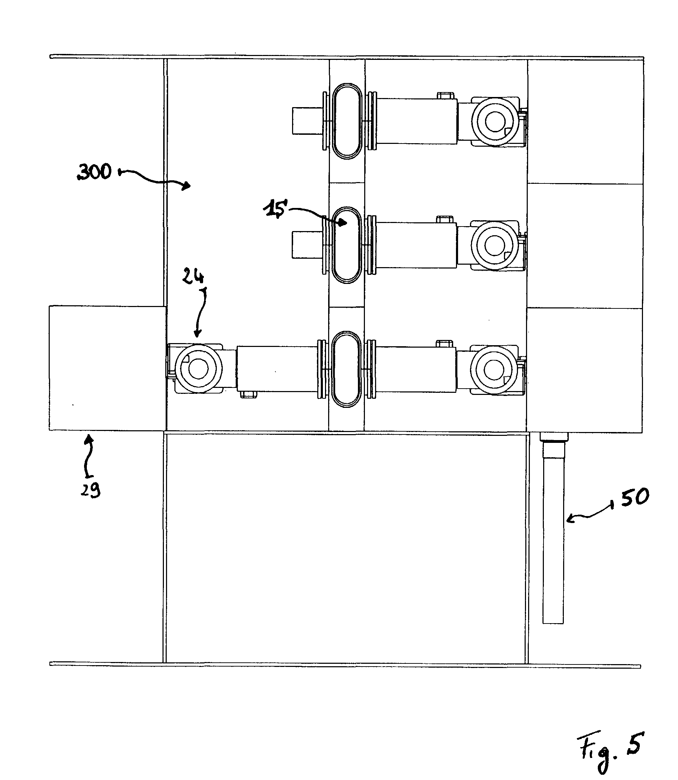

In a preferred embodiment (illustrated in figure 5) the secondary power apparatus 21 is enclosed in a casing 300, which is housed in the supporting frame 11.

For this aim, the supporting frame 11 can comprise a plurality of guiding elements (not shown) for housing the casing 300. In a preferred configuration, the casing 300 comprises provides a galvanic insulation from the conductive bus-bars 15 and/or for the elements of said power apparatuses that are at a dangerous voltage for the user. In practice, the elements of the power supply apparatus 21 that are "per sè" insulated (for example the control unit 29 of an actuator used in the circuit breaker 24) can be accessed directly to the user. This fact allows saving a considerable quantity of room with respect of the traditional solutions, further facilitating the installation and maintenance operations. In fact, a remarkably reduction of the use of metallic panels or other enclosing elements is provided.

It has been verified in practice that the medium voltage power supply cubicle, according to the present invention, allows achieving all the intended aims.

The structure of the MV cubicle 10, can be changed according to the needs of the user. Thanks to the presence of a plurality of feeding elements for each bus-bar 15, different configurations of the MV cubicle 10 can be considered according to the needs. The possibility of accessing to the bus-bars 15 on the front and the rear of the MV cubicle 10 allows enhancing this kind of flexibility, allowing, in the same time, an easy installation and easy maintenance operations.

It has been verified in practice that combining different embodiments of the MV cubicle 10 (in particular with four and six feeding elements 16 for each bus-bar 15) it is possible to build up all the electrical configurations that normally required in primary and/or secondary MV power distribution lines.

Moreover, the described configurations for the power apparatuses 21 allow tailoring any MV cubicle 10 according to the needs, obtaining in the same time a remarkable compact structure.

In practice a MV cubicle 10 implementing a required number of electric functionalities can be obtained arranging a prdefined number of standards elements.

The MV cubicle according to the present invention has proven to be particularly useful for the installation of primary and/or secondary MV switchboards or MV primary and/or secondary power distribution systems in general.

The medium voltage power distribution cubicle according to the present invention is susceptible of numerous modifications and variations, all of which are within the scope of the inventive concept. All the details may furthermore be replaced with other technically equivalent elements.

## Claims

1. A medium voltage power distribution cubicle, comprising:
- a supporting frame comprising a plurality of supporting elements;
- one or more conductive bus-bars for providing electric power to one or more loads, said bus-bars being supported by said supporting frame;
characterised by the fact that each of said bus-bars comprise a plurality of feeding elements, for connecting a predefined number of power supply derivations.

2. A medium voltage power distribution cubicle according to claim 1, characterised by the fact that said at least one of conductive bus-bars is made of a single piece of conductive material.

3. A medium voltage power distribution cubicle according to one or more of the previous claims characterised by the fact that said feeding elements are positioned along directions that are approximately vertical with respect of the laying plane of said on or more bus-bars.

4. A medium voltage power distribution cubicle, according to claim 3 characterised by the fact that said feeding elements are positioned along opposite directions that are approximately vertical with respect of the laying plane of said on or more bus-bars.

5. A medium voltage power distribution cubicle, according to claim 3 characterised by the fact that said feeding elements are positioned along parallel directions which is approximately vertical with respect of the laying plane of said on or more bus-bars.

6. A medium voltage power distribution cubicle, according to claim 4 characterised by the fact that each of said bus-bars comprises totally 6 or 6 feeding elements.

7. A medium voltage power distribution cubicle, according to claim 5 characterised by the fact that each of said bus-bars comprises totally 2 or 3 feeding elements.

8. A medium voltage power distribution cubicle, according to one or more of the previous claims characterised by the fact that at least one of said feeding elements comprises a conductive body, which protrudes from a surface of said one or more bus-bars.

9. A medium voltage power distribution cubicle, according to claim 8 characterised by the fact that said conductive body has a cross-section, which is approximately cylindrical.

10. A medium voltage power distribution cubicle, according to one or more of the previous claims characterised by the fact that said feeding element is assembled with the bus-bar wherein it is comprised.

11. A medium voltage power distribution cubicle, according to one or more of the previous claims characterised by the fact that one or more of said bus-bars has a cross-section, which is approximately oval.

12. A medium voltage power distribution cubicle, according to one or more of the previous claims characterised by the fact that said plurality of supporting elements comprise:
- first supporting elements for fixing said power distribution bus-bar apparatus to a supporting base; and
- second supporting elements, mechanically connected between two adjacent bus-bars.

13. A medium voltage power distribution cubicle, according to claim 12, characterised by the fact that said plurality of supporting elements comprise:
- third auxiliary supporting elements for mechanically connecting said second supporting elements to said first supporting elements.

14. A medium voltage power distribution cubicle, according to claim 12 characterised by the fact that one or more of said second supporting elements comprise an hollow body, which comprises a first saddle-shaped element, mechanically connected to a first bus-bar, and a second saddle-shaped element, mechanically connected to a second bus-bar, which positioned adjacent to said first bus-bar, said first and second element being assembled so as to form said hollow body.

15. A medium voltage power distribution cubicle, according to claim 14 characterised by the fact that said first and second elements are made of insulating material.

16. A medium voltage power distribution cubicle, according to one or more of the previous claims characterised by the fact that said plurality of power supply derivations comprises one or more power apparatuses comprising:
- one or more disconnectors; and/or
- one/or more plug-in elements; and/or
- one or more circuit breakers; and/or
- one or more switchgears; and/or
- one or more current and/or voltage sensing devices.

17. A medium voltage power distribution cubicle, according to claim 16 characterised by the fact that one or more of said power apparatuses comprise:
- a disconnector;
- a movable plug-in element for operatively connecting said disconnector to one of the feeding elements;
- a circuit breaker which is operatively connected to said disconnector and which is positioned downstream said disconnector;
- a current sensing device and a voltage sensing device that are positioned so as to measure the current and the voltage downstream to said circuit breaker.

18. A medium voltage power distribution cubicle, according to claim 16 characterised by the fact that one or more of said power apparatuses comprise:
- a disconnector which is fixed to one of the feeding elements;
- a movable plug-in element for operatively connecting said disconnector to a circuit breaker which is positioned downstream said disconnector;
- a current sensing device and a voltage sensing device that are positioned so as to measure the current and the voltage downstream to said circuit breaker.

19. A medium voltage power distribution cubicle, according to one or more of the claims from 16 to 18 characterised by the fact that one or more of said power apparatuses is enclosed in a casing, which is housed in said supporting frame.

20. A medium voltage power distribution cubicle, according to claim 19 characterised by the fact that said casing provides a galvanic insulation from said conductive bus-bars and/or for the elements of said power apparatuses that are at a dangerous voltage for the user.

21. A primary and/or secondary medium voltage switchboard characterised by the fact of comprising one or more medium voltage power distribution cubicles, according to one or more of the previous claims.

22. A medium voltage primary and/or secondary power distribution system, characterised by the fact of comprising one or more medium voltage power distribution cubicles, according to one or more of the claims from 1 to 20.
